# EUROPEAN PATENT APPLICATION

(11) **EP 2 940 707 A1**
(43) Date of publication of application: **04.11.2015**
(21) Application number: 13868012.9
(22) Date of filing: 29.11.2013
(51) Int. Cl.: H01H 31/02, H01H 1/38, H01H 1/44, H01H 31/32, H02B 13/02, H02B 13/075

(54) **SWITCHING APPARATUS**

(30) Priority: 26.12.2012 JP 2012281935
(71) Applicant: Hitachi, Ltd., Tokyo 100-8280 (JP)
(72) Inventor: SATO Kazuhiro, Tokyo 100-8280 (JP); MORITA Ayumu, Tokyo 100-8280 (JP); TSUCHIYA Kenji, Tokyo 100-8280 (JP)
(74) Representative: MERH-IP Matias Erny Reichl Hoffmann
(86) International application number: PCT/JP2013/082121
(87) International publication number: WO 2014/103612

(57) **Abstract**

To provide a switching apparatus improved in reliability. The switching apparatus includes: a fixed conductor (18A); a movable conductor (20) opposed to the fixed conductor (18A) and slidably moved on an inner side or outer side of the fixed conductor (18A) for closing contact or opening contact; a spring contact (22A) disposed at either one of the fixed conductor (18A) and the movable conductor (20); a protruding part (25) disposed at the other one, or either the fixed conductor (18A) or the movable conductor (20), and protruding toward the one conductor in a direction substantially perpendicular to a direction of motion axis of the movable conductor (20) as seen when the fixed conductor (18A) and the movable conductor (20) are in contact; and a plated contact part (26), and has a structure wherein the contact part (26) is formed on a far side of the protruding part (25), and is formed at a position farther than the protruding part (25) from the one conductor in the substantially perpendicular direction as seen when the fixed conductor (18A) and the movable conductor (20) are in contact.

## Description

### Technical Field

The present invention relates to a switching apparatus adopting a sliding contact method.

### Background Art

The switching apparatus is a device which is disposed in an electric power system and operates to switch a circuit by moving a position of a movable conductor relative to a fixed conductor. There is known a sliding contact method where contact between the fixed conductor and the movable conductor is accomplished by the movable conductor slidably moved on an inner side or outer side of the fixed conductor. It is noted here that the prior-art techniques related to the sliding contact are disclosed in Patent Literature 1 and Patent Literature 2.

Patent Literature 1 and Patent Literature 2 disclose a contact device where a pair of coaxially arranged conductors is axially slidably moved into fitting engagement such that the paired conductors are made to carry current via a conductive spring contact.

### Citation List

### Patent Literature

Patent Literature 1: Japanese Patent Application Laid-Open No. 2008-204634
Patent Literature 2: Japanese Patent Application Laid-Open No. 2008-204635

### Summary of Invention

### Technical Problem

The switching apparatus is used for iteratively switching circuit. In a case where the switching apparatus adopts the sliding contact method as set forth in the patent literature 1 and the patent literature 2, slide-in and slide-out motions are repeated between a contact part of the fixed conductor and a spring contact mounted to the movable conductor. Hence, plating applied to a surface of the contact part of the fixed conductor which makes contact with the spring contact is worn away. The plating is more worn and peeled off with each ON/OFF operation, which finally results in the exposure of a base material of the conductor. The exposure of the base material of the conductor involves fear that each ON/OFF operation induces change in the contact condition of contacts and contact resistance between the fixed conductor and the spring contact becomes instable and progressively increases, leading to temperature rise at the contact part. That is, to suppress the wear of the plating is to improve the reliability of the contact part and therefore of the switching apparatus per se.

In view of the foregoing, the invention has an object to provide a switching apparatus improved in reliability.

### Solution to Problem

For achieving the above object, a switching apparatus according to the invention includes: a fixed conductor; a movable conductor opposed to the fixed conductor and slidably moved on an inner side or outer side of the fixed conductor for closing contact or opening contact; a spring contact disposed at either one of the fixed conductor and the movable conductor; a protruding part disposed at the other one, or either the fixed conductor or the movable conductor, and protruding toward the one conductor in a direction substantially perpendicular to a direction of motion axis of the movable conductor as seen when the fixed conductor and the movable conductor are in contact; and a plated contact part, and has a structure wherein the contact part is formed on a far side of the protruding part, and is formed at a position farther than the protruding part from the one conductor in the substantially perpendicular direction as seen when the fixed conductor and the movable conductor are in contact.

### Advantageous Effects of Invention

According to the invention, the switching apparatus improved in reliability can be provided.

### Brief Description of Drawings

Fig. 1 is a sectional view showing a conduction state of a switching apparatus according to a first embodiment of the invention.
Fig. 2 is a sectional view showing a grounding standby state of the switching apparatus according to the first embodiment.
Fig. 3 is an enlarged view of a movable conductor and a bus-bar side fixed conductor of grounding disconnector according to the first embodiment, diagrammatically showing a contact open state.
Fig. 4 is an enlarged view of the movable conductor and the bus-bar side fixed conductor of grounding disconnector according to the first embodiment, diagrammatically showing a contact closed state.
Fig. 5 is a diagram showing a case where a spring contact is mounted to the bus-bar side fixed conductor of the switching apparatus according to the first embodiment.
Fig. 6 is an enlarged view of the movable conductor and the bus-bar side fixed conductor of grounding disconnector shown in Fig. 5, diagrammatically showing a contact open state.
Fig. 7 is an enlarged view of the movable conductor and the bus-bar side fixed conductor of grounding disconnector shown in Fig. 5, diagrammatically showing the contact closed state.
Fig. 8 is an enlarged view of a movable conductor and a bus-bar side fixed conductor of a grounding disconnector according to a second embodiment of the invention, diagrammatically showing the contact open state.
Fig. 9 is an enlarged view of a movable conductor and a bus-bar side fixed conductor of a grounding disconnector according to a third embodiment of the invention, diagrammatically showing the contact open state.
Fig. 10 is an enlarged view showing the vicinity of a contact area between a movable conductor and a bus-bar side fixed conductor of a grounding disconnector according to a fourth embodiment of the invention.

### Description of Embodiments

Preferred embodiments of the invention will hereinbelow be described with reference to the accompanying drawings. It goes without saying that the followings are intended for purposes of illustration only and the embodiments of the invention are not limited to the following embodiments.

### First Embodiment

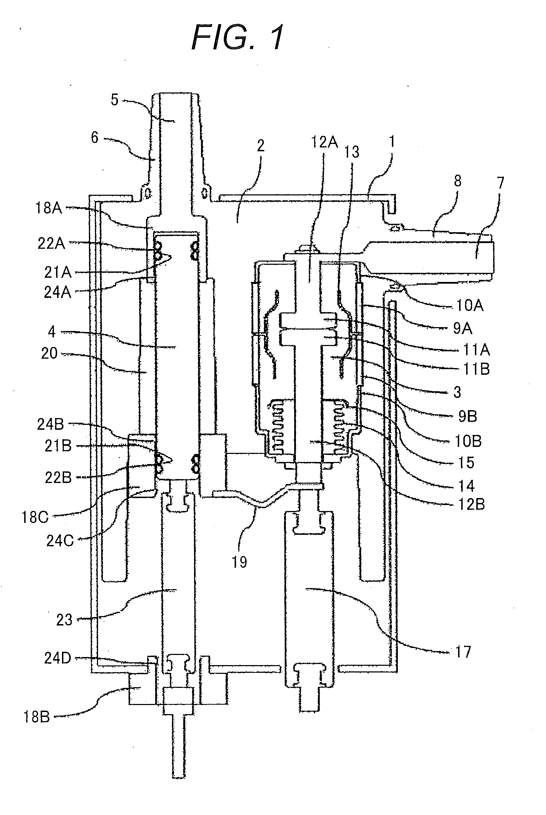

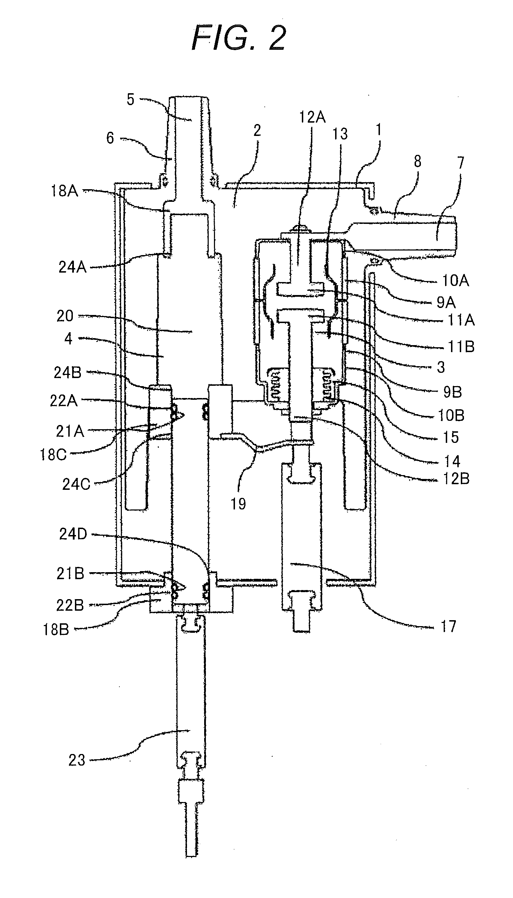

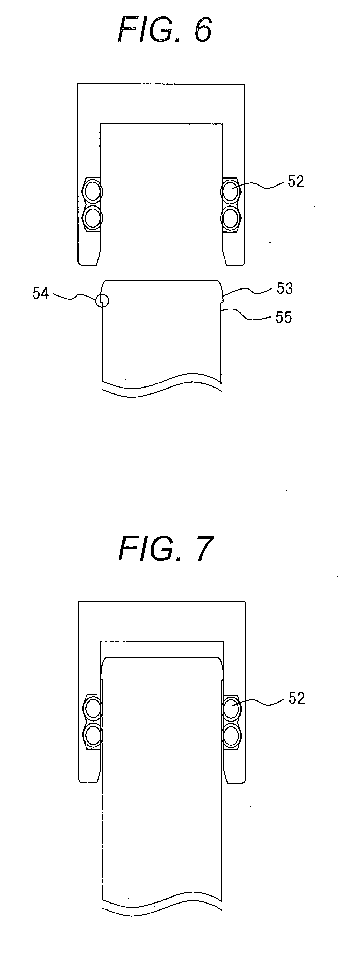

A first embodiment of the invention is described with reference to Fig. 1 to Fig. 7. As shown in Fig. 1 and Fig. 2, a switching apparatus according to this embodiment generally includes: a vacuum valve 3; a grounding disconnector 4; a bus-bar cable bushing 6 including a bus-bar side main circuit conductor 5; and a load cable bushing 8 including a load-side main circuit conductor 7, which are integrally cast molded of a solid insulating material 2 such as an epoxy resin and accommodated in a grounded metal housing 1.

The vacuum valve 3 includes: a fixed-side electrode 11A; a movable-side electrode 11B; a fixed-side holder 12A connected with the fixed-side electrode 11A; a movable-side holder 12B connected with the movable-side electrode 11B; and an arc shield 13 for protecting a fixed-side ceramic insulation tube 9A and a movable-side ceramic insulation tube 9B from arcs, which are arranged in a vacuum vessel including: the fixed-side ceramic insulation tube 9A; the movable-side ceramic insulation tube 9B; a fixed-side end plate 10A; and a movable-side end plate 10B. The fixed-side holder 12A is connected to the load-side main circuit conductor 7 so as to supply electric power to the load.

A bellows 14 is disposed on the movable-side such that the movable-side holder 12B can be moved. The vacuum valve 1 is adapted to axially drive the movable-side electrode 11B and the movable-side holder 12B by means of the above-described bellows 14 connected to the movable-side end plate 10B and the movable-side holder 12B, while maintaining the vacuum inside. Thus, the vacuum valve switches the movable-side electrode 11B and the fixed-side electrode 11A between a power-on state and a power-off state.

A bellows shield 15 is disposed in the vicinity of a connection between the bellows 14 and the movable-side electrode 11B in order to protect the bellows 14 from the arcs and the like occurring at the time of on-off switching. In addition, the bellows shield is also adapted to alleviate electric field concentration on a bellows end.

The movable-side electrode 11B is drivable as connected to a vacuum valve operating rod 17 connected with an unillustrated operation mechanism.

On the other hand, the grounding disconnector 4 includes: a bus-bar side fixed conductor 18A of grounding disconnector which has a bottomed cylindrical configuration and is connected to the bus-bar side via the bus-bar side main circuit conductor 5; a ground side fixed conductor 18B of grounding disconnector which has a bottomless cylindrical configuration and is set to a ground potential; an intermediate fixed conductor 18C of grounding disconnector which has a bottomless cylindrical configuration and is disposed in between the bus-bar side fixed conductor and the ground side fixed conductor and electrically connected to the movable-side holder 12B of the vacuum valve via a flexible conductor 19; a movable conductor 20 of grounding disconnector which has a column-like configuration and is linearly driven in the cylindrical configurations of these fixed conductors; ring-like spring contacts 22A and 22B which are mounted to spring-contact mounting grooves 21A and 21B disposed in the vicinity of opposite ends of the movable conductor 20 of grounding disconnector, which are arranged in coaxial relation. The interior of the grounding disconnector 4 is air insulated. While the movable conductor 20 of grounding disconnector and the individual fixed conductors employ a copper or aluminum material, the material for these conductors are not limited to these.

The movable conductor 20 of grounding disconnector is connected to an operation device (not shown) via driving means for the movable conductor of grounding disconnector, that is, an insulated rod 23 for operating grounding disconnector. The switching apparatus can be switched to any one of conduction standby state (or conduction state if the vacuum valve is powered on), disconnection state and grounding state (or grounding standby state if the inside of the vacuum valve is in a contact open state) by linearly driving, in the grounding disconnector, the movable conductor 20 of grounding disconnector relative to the fixed conductors. The fixed conductors 18A, 18B and 18C have inside diameters defined to be larger than an outside diameter of the movable conductor 20 of grounding disconnector.

Silver plating is applied to surfaces of the fixed conductors of the grounding disconnector 4, the movable conductor 20 of grounding disconnector and the spring contacts 22A and 22B in order to prevent conduction failure due to surface deterioration such as oxidation, thus providing for a stable large-current conduction.

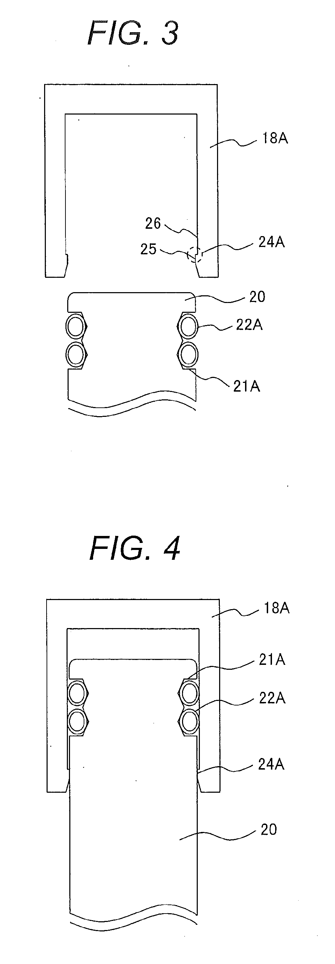

According to the embodiment shown in Fig. 3, the fixed conductors 18A, 18B and 18C are each provided with a protruding part 25 which protrudes toward the movable conductor 20 of grounding disconnector (with the spring contact) in a direction substantially perpendicular to a direction of motion axis of the movable conductor 20 of grounding disconnector as seen when the fixed conductor 18A, 18B and 18C is in contact with the movable conductor 20 of grounding disconnector. Further, the fixed conductors 18A, 18B and 18C each include a contact part 26 which is farther than the protruding part 25 from and on the opposite side from (the far side of) the movable conductor 20 of grounding disconnector in the direction of motion axis as seen when the movable conductor 20 of grounding disconnector is separated from the fixed conductors for contact opening. As described above, the silver plating is applied to the surfaces of the fixed conductors 18A, 18B and 18C. Similarly, the silver plating is also applied to a surface of the contact part 26. In the direction of motion axis, a portion between the protruding part 25 and the contact part 26 defines a step 24A tapered from the protruding part 25 toward the contact part 26 (the step formed between the protruding part closer to the movable conductor and the contact part farther away from the movable conductor).

The fixed conductor is progressively increased in diameter toward the movable conductor 20, the diameter determined in a direction substantially perpendicular to the direction of motion axis of the movable conductor 20. This configuration is designed to progressively increase frictional force at the time of contact between the fixed conductor and the spring contact and to ease a rapid increase of the frictional force.

Now, description is made on a circuit switching operation of the switching apparatus having the above-described structure. Fig. 1 shows a state where both the vacuum valve 3 and the grounding disconnector 4 are powered on. The bus-bar side fixed conductor 18A, the spring contact 22A mounted to the bus-bar side fixed conductor, the movable conductor 20, the spring contact 22B mounted to the ground side fixed conductor, and the intermediate fixed conductor 18C are electrically connected. Fig. 2 shows a preparatory stage for grounding position. Although the grounding disconnector 4 is switched to the grounding position, the fixed-side electrode 11A and the movable-side electrode 11B of the vacuum valve 3 are in the contact open state so that a load side is not grounded. In this state, the movable-side electrode 11B in the vacuum valve 3 is powered on so that the load side electrically connected to the fixed-side electrode 11A of the vacuum valve 3 is grounded. In addition to the power-on state, the grounding state and the grounding standby state, the switching apparatus according to the embodiment can assume: the disconnection state where the movable-side electrode 11B of the vacuum valve 3 and the movable conductor 20 of the grounding disconnector 4 are both separated from the fixed-side electrode 11A and the fixed conductors 18A, 18B and 18C of the grounding disconnector 4; and the power-off state (or the conduction standby state) where the movable conductor 20 and the fixed conductors 18A, 18C of the grounding disconnector 4 are electrically connected but only the vacuum valve 3 is placed in the contact open state. Switching operations to all the states are not described herein.

Not only the movable-side electrode 11B of the vacuum valve 3 but also the movable conductor 20 of the grounding disconnector 4 need be moved for shifting from the state of Fig. 1 to the state of Fig. 2. In the grounding disconnector 4, the inside diameters of the fixed conductors are defined to be larger than the outside diameter of the movable conductor 20 so as to allow the movable conductor 20 to slidably move in each of the cylindrical configurations of the fixed conductors (whether the cylindrical configuration is bottomed or bottomless).

The sliding motion between the fixed conductor 18A, 18B and 18C and the movable conductor 20 is described with reference to Fig. 3 and Fig. 4. The description is made herein by using the fixed conductor 18A as a typical example of the fixed conductors. It is noted, however, that the other fixed conductors 18B and 18C also have the same structure and thence, is adapted to reduce friction.

In a case where the switching apparatus does not have the mechanism according to the embodiment, the following problem exists. If the movable conductor 20 is driven toward the bus-bar side fixed conductor 18A to shift the grounding disconnector 4 from the disconnection state to the conduction standby state, as described above, the spring contact 22A mounted to the movable conductor 20 on its side close to the bus-bar side fixed conductor 18A is first brought into contact against a distal end of the bus-bar side fixed conductor 18A, inserted therein as being compressed, slidably moved on an inner side of the bus-bar side fixed conductor 18A, and stopped at a predetermined conduction position. The frictional force in a series of insertion/extraction motions peaks immediately after the spring contact 22A makes contact with the distal end of the bus-bar side fixed conductor 18A.

It is noted here that the spring contact 22A is formed by spirally winding a wire having a spring characteristic into an annular configuration. The wire has a very small diameter for the fixed conductor 18 but makes a kind of projection against the fixed conductor 18.

Accordingly, there occurs wear and peeling in which the wire of the spring contact 22A mechanically scrapes off the silver plating on the distal end of the bus-bar side fixed conductor 18A. The wear and peeling at the distal end of the bus-bar side fixed conductor 18A progresses to the stop position of the spring contact 22A on the inner side of the bus-bar side fixed conductor 18A. This wear and peeling gradually progresses in conjunction with the sliding motion between the bus-bar side fixed conductor 18A and the spring contact 22A, that is, the repetition of the ON/OFF operations. Finally, a base material of the bus-bar side fixed conductor 18A will be exposed, resulting in the increase in contact resistance between the bus-bar side fixed conductor 18A and the spring contact 22A.

According to the embodiment, on the other hand, the step 24A tapered from the protruding part 25 to the contact part 26 is formed between the protruding part 25 and the contact part 26. The greatest frictional force in the insertion/extraction sliding motion can be borne by a portion between the distal end and the protruding part 25 while the spring contact is allowed to slide on the contact part 26 on the far side of the step 24A with less frictional force than that of a case where the step 24A is not provided. Thus, the wear and peeling of the plating can be suppressed. Therefore, the switching apparatus can achieve enhanced reliability by maintaining stable low contact resistance for a long period of time, preventing temperature rise at a conducting part and such.

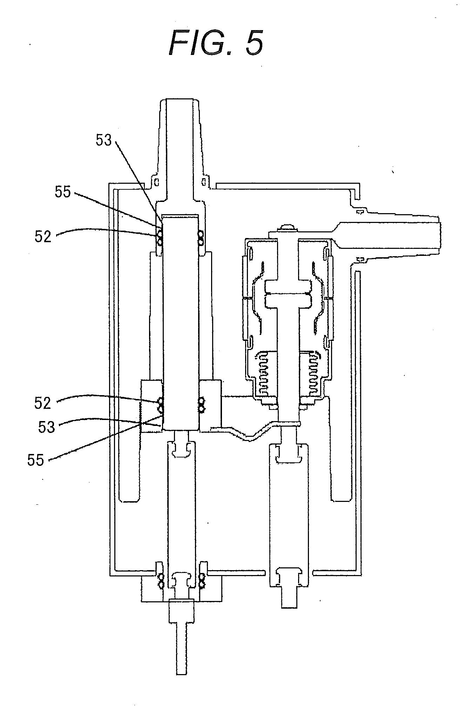

As shown in Fig. 1 to Fig. 4, this embodiment illustrates the example where the spring contacts 22A and 22B are mounted to the movable conductor 20 and each of the fixed conductors of the grounding disconnector is formed with the step on the inner side thereof. As shown in Fig. 5 to Fig. 7, the same effect can also be obtained in a case where a spring contact 52 is mounted to each of the fixed conductors of the grounding disconnector, a protruding part 53 is formed in the vicinity of an end of the movable conductor of grounding disconnector, a step 54 is formed on the far side of the protruding part 53 (the side away from the fixed conductor in the direction of motion axis), and a contact part 55 is disposed on the far side of the step 54. Fig. 5 to Fig. 7 show the same structure as the above except that the spring contact 52 is mounted to the counterpart conductor in place of the movable conductor and that the protruding part 53 and the contact part 55 are formed on the counterpart conductor in place of the fixed conductor. Hence, a detailed description of this structure is dispensed with.

That is, the spring contact may be mounted to either of the fixed conductor and the movable conductor. If the counter conductor is provided with the protruding part and the contact part is disposed on the far side of the protruding part, the same effect can be obtained because the frictional force results from relative motion between the fixed conductor and the movable conductor.

The protruding part is defined to mean a component that is formed at one conductor free from the spring contact and protrudes to the other conductor with the spring contact in the direction substantially perpendicular to the direction of motion axis of the movable conductor on the basis of a contacting positional relation between the fixed conductor and the movable conductor.

The phrase "the far side of the protruding part" can be rephrased as the opposite side from the conductor provided with the spring contact with respect to the protruding part in the direction of motion axis of the movable conductor on the basis of a contact-opening positional relation between the fixed conductor and the movable conductor.

While this embodiment illustrates the case where the movable conductor is slidably moved on the inner side of the fixed conductor, a case where the movable conductor is slidably moved on an outer side of the fixed conductor is also conceivable.

While this embodiment illustrates the case where the step is formed between the protruding part and the contact part, the feature is not necessarily limited to the step. If the contact part is formed at a position farther than the protruding part from the movable conductor in the direction substantially perpendicular to the direction of motion axis on the basis of a contacting positional relation between the fixed conductor and the movable conductor, the greatest frictional force in the insertion/extraction sliding motion can be borne by the protruding part so that the frictional force applied to the contact part can be reduced. Therefore, the switching apparatus can be improved in reliability.

A specific mode, other than the step, for forming the contact part at the position farther than the protruding part from the movable conductor in the direction substantially perpendicular to the direction of motion axis may be exemplified by a conductor progressively varied in diameter, in the substantially perpendicular direction, from the protruding part toward the contact part. The diameter in the substantially perpendicular direction may be varied in the following manner. In the case where the movable conductor is slidably moved on the inner side of the fixed conductor, the diameter in the substantially perpendicular direction may be consistently decreased from the protruding part toward the contact part. In the case where the movable conductor is slidably moved on the outer side of the fixed conductor, the diameter in the substantially perpendicular direction may be consistently increased from the protruding part toward the contact part. This mode will be described in the following embodiment.

### Second Embodiment

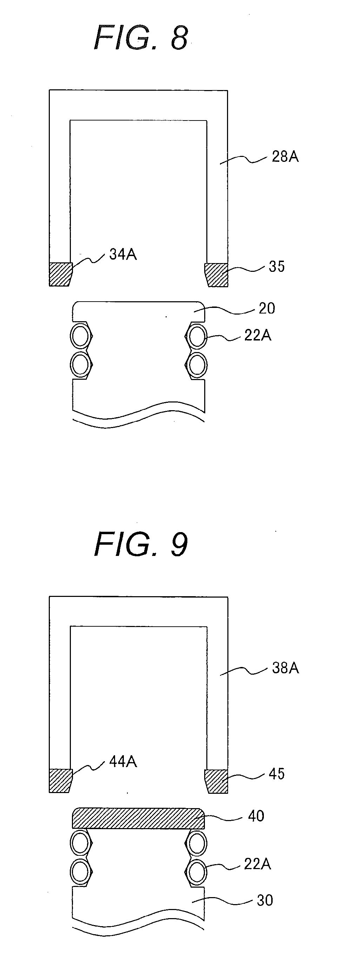

A second embodiment of the invention is described with reference to Fig. 8. It is noted that the description is made only on difference from the first embodiment and the components corresponding to those of the first embodiment are not described. The features described with reference to the first embodiment and a variety of equivalents thereof are all applicable to this embodiment, as well.

In the switching apparatus according to the first embodiment, the whole fixed conductors are formed of the same material. In a switching apparatus having a contact structure of this embodiment shown in Fig. 8, a portion between a distal end of a bus-bar side fixed conductor 28A and a protruding part 34A is formed of a material 35 having a smaller coefficient of friction than that of the other portion of each of the fixed conductors of the grounding disconnector. The frictional force right after contact between the spring contact 22A mounted to the movable conductor 20 on its side close to the bus-bar side fixed conductor 28A and the distal end of the bus-bar side fixed conductor 28A can also be reduced by adopting this structure. Accordingly, a driving force of the operation device (not shown) connected to the movable conductor 20 of grounding disconnector can be reduced and hence, the operation device can be reduced in size and weight. Needless to say, the step is formed so that the material according to this embodiment used for forming the portion between the distal end of the bus-bar side fixed conductor and the protruding part 34A does not mean that the frictional force on the contact part increases as compared with the first embodiment. While achieving the effect of the first embodiment, this embodiment can also reduce the frictional force right after the contact between the spring contact 22A and the distal end of the bus-bar side fixed conductor 28A.

The whole portion between the distal end of the bus-bar side fixed conductor 28A and the step 34A need not necessarily be formed of the different material from that forming the other portion of the fixed conductor. The same effect can also be achieved when only the surface of the portion between the distal end of the bus-bar side fixed conductor 28A and the step 34A is formed of the different material having the smaller coefficient of friction or when only the surface of the distal end of the bus-bar side fixed conductor 28A is formed of the material having the smaller coefficient of friction.

This embodiment has been described by way of a typical example of the portion of the sliding motion between the bus-bar side fixed conductor 28A and the movable conductor 20. The invention is also applicable to other conductors involved in the sliding motion such as the intermediate fixed conductor of grounding disconnector and the ground side fixed conductor of grounding disconnector, the description of which need not be repeated.

### Third Embodiment

A third embodiment of the invention is described with reference to Fig. 9. It is noted that the description is particularly made only on difference from the second embodiment and the components corresponding to those of the foregoing embodiments are not described. The features described with reference to the foregoing embodiments and a variety of equivalents thereof are all applicable to this embodiment, as well.

In the switching apparatus according to the second embodiment, the whole movable conductor is formed of the same material. In a switching apparatus having a contact structure of this embodiment shown in Fig. 9, a portion between a distal end of a bus-bar side fixed conductor 38A and a step 44A, and a distal end (on a side closer to the fixed conductor than the spring contact 22A) of a movable conductor 30 are formed of a material having a smaller coefficient of friction than that of the other portion of each of the fixed conductors of the grounding disconnector, or more particularly formed of an insulator 45 (insulator on the fixed-conductor side) and an insulator 40 (insulator on the movable-conductor side).

In addition to the effect of the second embodiment, an effect to reduce the frictional force right after contact between the spring contact 22A mounted to the movable conductor 20 and the distal end of the bus-bar side fixed conductor 18A can also be achieved by adopting this structure. Hence, the driving force of the operation device (not shown) connected to the movable conductor 20 0 can be reduced even more and hence, the operation device can be even more reduced in size and weight.

The electric field at the distal ends of the fixed conductor and the movable conductor can be relaxed by forming the distal ends of the conductors of the insulator 40and 45, respectively. Therefore, the switching apparatus in the disconnection state can be improved in dielectric strength between the fixed conductor and the movable conductor. Accordingly, the switching apparatus in the disconnection state can maintain the dielectric strength between the movable conductor 30 and the bus-bar side fixed conductor 38A if the distance between the movable conductor and the fixed conductor is made shorter than in the case where the distal ends of the conductors are not formed of the insulating material. Thus, the switching apparatus can be reduced in size and the size reduction leads to the weight reduction.

Even though the whole distal ends of the bus-bar side fixed conductor 38A and the movable conductor 30 are not formed of the insulating material, the same effect can be achieved so long as the distal end surface of the bus-bar side fixed conductor 38A and the distal end surface of the movable conductor 30 are formed of the insulating material.

This embodiment has also been described by way of a typical example of the portion of the sliding motion between the bus-bar side fixed conductor 38A and the spring contact 22A. The invention is also applicable to other conductors involved in the sliding motion such as the intermediate fixed conductor of grounding disconnector and the ground side fixed conductor of grounding disconnector, the description of which need not be repeated.

### Fourth Embodiment

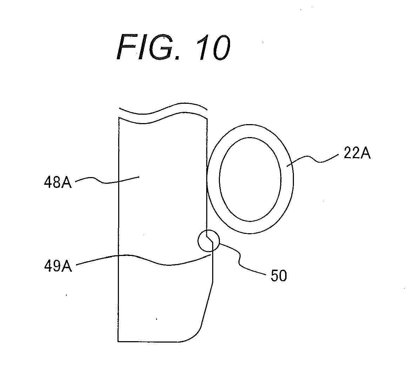

A fourth embodiment of the invention is described with reference to Fig. 10. It is noted that the description is particularly made only on difference from the first embodiment and the components corresponding to those of the foregoing embodiments are not described. The step is provided between the protruding part and the contact part in the first embodiment. In this embodiment, the step is replaced by a slope 50 which is formed in a manner that a fixed conductor 48 has its diameter substantially perpendicular to the direction of motion axis of the movable conductor consistently decreased from the protruding part toward the contact part. Otherwise, the features described with reference to the foregoing embodiments and a variety of equivalents thereof are all applicable to this embodiment singly or in combination.

The slope 50 is formed in the manner that the fixed conductor 48A has the diameter substantially perpendicular to the direction of motion axis consistently decreased from the protruding part toward the contact part. When the switching apparatus is shifted from the conduction standby state to the disconnection state (the movable contact is separated from the fixed conductor), the spring contact 22A is slidably moved on the inner side of the bus-bar side fixed conductor 48A so as to come into contact with the slope 50 on the far side of a protruding part 49A. Subsequently, the spring contact is extracted as compressed by an amount equivalent to the height of the slope 50. As compared with the case where the step is provided, therefore, the amount of wear and peeling of the silver plating on the spring contact 22A caused by the slope 50 is reduced. In spite of a large number of ON/OFF operations, the switching apparatus can maintain the low contact resistance.

This embodiment has been described by way of the case where the slope 50 is provided as the component which is defined by consistently decreasing the diameter (substantially perpendicular to the direction of motion axis) of the fixed conductor 48 from the protruding part toward the contact part. However, the invention is not limited to the slope of a linear function but may also include a component having a curvature, for example.

While the foregoing embodiments are described by way of the example where the silver plating is employed, it goes without saying that the plating to cover the surface of the contact part is not limited to the silver plating. Such a difference is not a matter related to the nature of the invention.

While the foregoing embodiments have been described by way of the example of the grounding disconnector, it goes without saying that the scope of the invention is not limited to the grounding disconnector. The invention is generally applicable to switching apparatuses having sliding contact mechanisms.

It is noted that the present invention is not limited to the foregoing embodiments but includes a variety of modifications. For example, the foregoing embodiments have been described in detail for the purpose of clarity. The invention is not necessarily limited to those including all the features described. A part of the features of one embodiment can be replaced by a feature of another embodiment. Further, a feature of another embodiment can also be added to the features of one embodiment. As for the features of each of the embodiments, another feature can be added to the features thereof, or a part of the features thereof can be deleted or replaced by another feature.

### Reference Signs List

1... metal housing,
2... solid insulating material,
3... vacuum valve,
4... grounding disconnector,
5... bus-bar side main circuit conductor,
6... bus-bar cable bushing,
7... load-side main circuit conductor,
8... load cable bushing,
9A... fixed-side ceramic insulation tube,
9B... movable-side ceramic insulation tube,
10A... fixed-side end plate,
10B... movable-side end plate,
11A... fixed-side electrode,
11B... movable-side electrode,
12A... fixed-side holder,
12B... movable-side holder,
13... arc shield,
14... bellows,
15... bellows shield,
17... vacuum valve operating rod,
18A... bus-bar side fixed conductor of grounding disconnector,
18B... ground side fixed conductor of grounding disconnector,
18C... intermediate fixed conductor of grounding disconnector,
19... flexible conductor,
20... movable conductor of grounding disconnector,
21... spring-contact mounting groove,
22A, 22B... spring contact,
23... insulated rod for operating grounding disconnector,
24A, 24B... step,
25... protruding part,
26... contact part,
35, 45... distal end of fixed conductor,
40... distal end of movable conductor,
50... slope.

## Claims

1. A switching apparatus comprising:
a fixed conductor;
a movable conductor opposed to the fixed conductor and slidably moved on an inner side or outer side of the fixed conductor for closing contact or opening contact;
a spring contact disposed at either one of the fixed conductor and the movable conductor;
a protruding part disposed at the other one, or either the fixed conductor or the movable conductor, and protruding toward the one conductor in a direction substantially perpendicular to a direction of motion axis of the movable conductor as seen when the fixed conductor and the movable conductor are in contact; and
a plated contact part,
wherein the contact part is formed on a far side of the protruding part, and is formed at a position farther than the protruding part from the one conductor in the substantially perpendicular direction as seen when the fixed conductor and the movable conductor are in contact.

2. The switching apparatus according to Claim 1, wherein a step is formed between the protruding part and the contact part in the direction of motion axis.

3. The switching apparatus according to Claim 1, wherein a portion between the protruding part and the contact part in the direction of motion axis is progressively varied in diameter in the substantially perpendicular direction from the protruding part toward the contact part.

4. The switching apparatus according to any one of Claims 1 to 3, including a portion which is progressively varied in diameter in the substantially perpendicular direction from the protruding part toward the one conductor.

5. The switching apparatus according to Claim 4, wherein the protruding part, and the portion progressively varied in the diameter in the substantially perpendicular direction from the protruding part toward the one conductor have surfaces that have a smaller coefficient of dynamic friction than a surface of the contact part.

6. The switching apparatus according to any one of Claims 1 to 5, wherein the one conductor includes a portion which is closer to the other conductor than the spring contact in the direction of motion axis as seen when the fixed conductor and the movable conductor are separated and is progressively varied in diameter in the substantially perpendicular direction toward the other conductor.

7. The switching apparatus according to Claim 6, wherein the portion closer to the other conductor than the spring contact and progressively varied in the diameter in the substantially perpendicular direction toward the other conductor has a surface which has a smaller coefficient of dynamic friction than a surface portion of the one conductor which is on the opposite side from the other conductor with respect to the spring contact.

8. The switching apparatus according to Claim 5 or 7, wherein the portion having the smaller coefficient of dynamic friction is formed of an insulating material.

9. The switching apparatus according to any one of Claims 1 to 8, wherein the fixed conductor has a periphery covered with a solid insulating material and is electrically connected to a load side,
the switching apparatus further comprising an operation device,
wherein an operating force from the operation device is applied to the movable conductor via an operating rod, and the movable conductor is electrically connected to a disconnector having a function to interrupt current and is connected to a bus-bar side via the disconnector.
